Europäisches Patentamt

**European Patent Office**

**Office européen des brevets**

(19)

(11) Veröffentlichungsnummer: **0 025 824 B1**

(12) **EUROPÄISCHE PATENTSCHRIFT**

(45) Veröffentlichungstag der Patentschrift:
**12.09.84**

(21) Anmeldenummer: **80103919.9**

(22) Anmeldetag: **09.07.80**

(51) Int. Cl.³: **C 01 B 17/88**, C 01 B 17/90,
B 01 D 3/18, B 01 D 3/20

(54) **Verfahren und Vorrichtung zur Reinigung fluoridhaltiger Abfallschwefelsäure.**

(30) Priorität: **14.07.79 DE 2928598**

(43) Veröffentlichungstag der Anmeldung:
**01.04.81 Patentblatt 81/13**

(45) Bekanntmachung des Hinweises auf die Patenterteilung:
**12.09.84 Patentblatt 84/37**

(84) Benannte Vertragsstaaten:
**CH DE FR IT LI SE**

(56) Entgegenhaltungen:
**DE - B - 1 262 225**
**DE - C - 299 774**
**FR - A - 1 225 411**
**FR - A - 2 125 400**
**FR - A - 2 265 675**
**GB - A - 762 985**
**GB - A - 788 075**
**US - A - 3 677 701**
**US - A - 3 749 648**
**US - A - 4 033 899**

(73) Patentinhaber: **HOECHST AKTIENGESELLSCHAFT,
Postfach 80 03 20, D-6230 Frankfurt am Main 80 (DE)**

(72) Erfinder: **Schlegel, Rainer, Albanstrasse 18,
D-6234 Hattersheim am Main (DE)**

## Beschreibung

Die vorliegende Erfindung betrifft ein Verfahren und eine Vorrichtung zur Reinigung und gleichzeitigen Konzentration von Abfallschwefelsäure, die neben Wasser noch Fluorid und gegebenenfalls noch organische Verunreinigungen enthält.

Bei der Herstellung aromatischer Fluorverbindungen in Anwesenheit von konzentrierter Schwefelsäure fällt häufig eine Abfallschwefelsäure an, die Fluoridionen enthält. Darüber hinaus kann die Abfallschwefelsäure noch Wasser, grössere Mengen an aromatischen Fluorverbindungen sowie anorganische Verunreinigungen enthalten. Aus Gründen des Umweltschutzes ist es erforderlich, derartige Abfallsäuren zu regenerieren. Dabei erweist es sich, dass gerade die Verunreinigung an Fluorid auf metallene Werkstoffe in Gegenwart von Schwefelsäure stark korrosiv wirkt. Es ist daher notwendig, die Fluorid-Verunreinigung möglichst früh und möglichst vollständig aus der Abfallschwefelsäure zu entfernen.

So ist aus der US-Patentschrift 3 677 701 ein Verfahren bekannt, bei dem Kieselgur der Abfallschwefelsäure im Überschuss zugefügt wird, wobei Fluorid chemisch gebunden wird und in Form des gasförmigen $SiF_4$ entweicht. Nach Beendigung der Reaktion wird restliches Kieselgur abfiltriert. Die so behandelte Abfallsäure wird danach in einer konventionellen Stripkolonne zur weiteren Fluorentfernung unter Vakuum destilliert. Damit wird die Stripkolonne nicht mit der gesamten Fluoridmenge beaufschlagt und die Korrosion wesentlich verringert. Nachteilig ist bei diesem Verfahren die Filtration des überschüssigen Kieselgurs von der von Fluorid befreiten Säure, die eventuell unter Druck vorgenommen werden muss. Da dieses Verfahren bei Raumtemperatur verläuft, werden organische Fluorverbindungen, die eventuell in der Schwefelsäure gelöst sind, nicht zerstört.

Ein weiteres Verfahren zur Entfernung von Fluorid aus Abfallschwefelsäure, die aus der Herstellung von Chlordinitrobenzotrifluorid herrührt, ist Gegenstand der US-Patentschrift 3 749 648. Dabei wird durch ein geeignetes Extraktionsmittel zunächst die Hauptmenge der organischen Nitro- und Fluorverbindungen bei einer Schwefelsäurekonzentration von 86 bis 93% aus der Abfallschwefelsäure entfernt, danach die Säure mit Wasser auf weniger als 72% verdünnt und einer Wasserdampfdestillation unterworfen. Unter diesen Bedingungen werden Fluorwasserstoff und organische Fluorverbindungen über Kopf abgetrieben. Die im Sumpf anfallende Abfallschwefelsäure enthält noch höher siedende organische Verbindungen. Nach Abkühlung, Filtration und Behandlung mit Aktivkohle kann die so gereinigte Abfallschwefelsäure einer Aufkonzentration zugeführt werden. Die Vielzahl der Schritte dieses Aufarbeitungsverfahrens bedingt jedoch einen erheblichen apparativen Aufwand.

In Europa wird Abfallschwefelsäure aus Nitrierprozessen vielfach nach dem bekannten Pauling-Verfahren (DE-Patentschrift 299 774) aufkonzentriert. Eine Pauling-Apparatur besteht im wesentlichen aus einem gusseisernen Kessel und einer Abtriebskolonne aus Siliziumguss mit mehreren praktischen Böden. Die Abfallschwefelsäure wird in einer Konzentration von mehr als 68% aufgegeben und auf mindestens 96% bei einer Kesseltemperatur von 310 bis 325 °C konzentriert. Die Aufarbeitung von fluoridhaltiger Abfallschwefelsäure in dieser Apparatur würde rasch zu einer Zerstörung der Siliziumguss-Kolonne führen. Ähnliche Bedenken gelten für Säuren, die zwar frei von anorganischem Fluorid sind, die aber in der Abtriebssäule der Pauling-Apparatur, z.B. durch Hydrolyse gelöster Nitro-Fluor-Aromaten, Fluorwasserstoff freisetzen.

Auch bei anderen Verfahren zur Konzentration von Abfallschwefelsäure für die Apparate aus den Werkstoffen Siliziumguss, ®Hastelloy, Glas oder Stahlemail verwendet werden müssen, können fluoridhaltige Abfallschwefelsäuren wegen der drohenden Korrosion nicht aufgearbeitet werden. Auch Graphit lässt sich nicht einsetzten, sofern die Abfallschwefelsäure Salpetersäure enthält. Versuche der Anmelderin haben gezeigt, dass Abtriebskolonnen, die aus Tantal oder Gold gefertigt sind, zum Reinigen fluroridhaltiger Abfallschwefelsäure geeignet wären. Jedoch ist die konstruktive Ausführung einer Abtriebskolonne in technischem Massstab aus Tantal oder Gold ausgesprochen aufwendig.

Es ist aus FR-A-2 125 400 und DE-B-1 262 225 bekannt, zumindest im Bereich des Bodens einer Kolonne die Konstruktionsteile vor dem korrosiven Einfluss von Gasen oder Flüssigkeiten dadurch zu schützen, dass man sie zumindest oberflächlich aus geeignetem Kunststoff herstellt. Dieser Stand der Technik lehrt es jedoch nicht, wie Metallteile mit Kunststoffteilen so zu verbinden sind, dass diese bei thermischer Belastung nicht verformt werden. Es bestand aber die Aufgabe, ein Verfahren anzugeben, das es gestattet, fluoridhaltige Abfallschwefelsäure aufzuarbeiten, ohne dass für die Verfahrensapparatur grössere Mengen schwer verarbeitbarer oder teurer Metalle wie Tantal oder Gold eingesetzt werden müssen.

Es wurde nun ein Verfahren zur Reinigung fluoridhaltiger, 65- bis 95%iger Abfallschwefelsäure gefunden, die Wasser, organische Verunreinigungen und 0,02 bis 5% Fluorid enthält, das dadurch gekennzeichnet ist, dass man die Abfallschwefelsäure auf den obersten Boden einer Abtriebskolonne gibt, die aus einem oberen Teil mit 1 bis 9 Böden und einem unteren Teil aus Siliziumguss mit 1 bis 3 Böden besteht, wobei der obere Teil einen Kolonnenmantel aus Metall enthält, der auf der Innenseite eine Auskleidung aus säurefestem Kunststoff trägt, zwischen Auskleidung und Metallmantel ein Zwischenraum besteht und der Druck in diesem Zwischenraum um mindestens 10 mbar niedriger gehalten wird als in der Kolonne selbst, man die Abfallschwefelsäure in der Kolonne aufheizt und vorkonzentriert, man anschliessend die aufgeheizte Säure in einen mit siedender konzentrierter Schwefelsäure gefüllten Pauling-Kessel aus Gusseisen führt, man die aus dem Pauling-Kessel entweichenden Schwefelsäuredämpfe in der Abtriebskolonne durch die entgegenströmende Abfallschwefelsäure kondensiert und man fluoridfreie konzentrierte Schwefelsäure aus dem Paulin-Kessel abzieht.

Soweit für Konstruktionsteile, die mit Säure in Berührung kommen, kein säurefester Kunststoff verwendet wird, steht als beständiger Werkstoff praktisch nur das schwer verarbeitbare Tantal zur Verfügung. Es ist deshalb vorteilhaft, mindestens im Bereich eines Bodens der Abtriebskolonne sämtliche Konstruktionsteile mindestens oberflächlich aus Kunststoff herzustellen. Besonders sinnvoll ist dies im Bereich des obersten Bodens oder der obersten Böden der Abtriebskolonne, weil dort die höchsten HF-Konzentrationen und die niedrigsten Temperaturen auftreten.

Die untersten Böden der Abtriebskolonne stehen jedoch in Kontakt mit siedender Schwefelsäure, so dass bei Normaldruck Kunststoffteile bei den herrschenden Temperaturen nicht mehr ausreichend fest sind. Ferner ist bei richtiger Fahrweise in diesem Bereich Fluorwasserstoff bereits ausgetrieben, was den Einsatz von Metallwerkstoffen ermöglicht.

Die Verwendung von säurefestem Kunststoff kann auf die Oberfläche von Konstruktionsteilen (z.B. Siebböden und Glockenböden) beschränkt sein, wenn die hohe mechanische Festigkeit des Metallkerns erwünscht ist. Andernfalls können Konstruktionsteile ganz aus Kunststoff gefertigt werden (z.B. Auskleidung des Kolonnenmantels, Glocken für Glockenböden).

Beim erfindungsgemässen Reinigungsverfahren wird die Säure gleichzeitig konzentriert, so dass letztlich eine 95- bis 97%ige gereinigte Säure anfällt, die wieder eingesetzt werden kann.

Bei Fluoridgehalten von unter 0,01% sind auch die üblichen Werkstoffe ausreichend beständig. Gehalte von 0,02% Fluorid führen jedoch noch zu einer deutlichen Erhöhung der Korrosionsgeschwindigkeit. Die Menge der organischen Verunreinigungen soll (gerechnet als Kohlenstoff) 2 Gew.-% nicht übersteigen. Andernfalls müssen bei der Regenerierung hohe Säureverluste in Kauf genommen werden oder relativ grosse Mengen Salpetersäure zugesetzt werden.

Die unteren Böden der Abtriebskolonne, die also dem Heizbehälter benachbart sind, werden vorzugsweise aus Siliziumguss gefertigt.

Das Verfahren wird bevorzugt bei Arbeitsdrükken von 0,2 bis 2 bar durchgeführt. Damit lassen sich gleichzeitig im oberen Abschnitt der Abtriebskolonne Temperaturen von 60–250°C einhalten. Bei höheren Temperaturen verlieren die bekannten säurefesten Kunststoffe den grössten Teil ihrer mechanischen Festigkeit, so dass eine ausreichende Stabilität der daraus gefertigten Teile nicht mehr gewährleistet ist.

Als säurefeste Kunststoffe sind einsetzbar Polyvinylidenfluorid und Poly-tetrafluorethylen. Bei niedrigeren Belastungstemperaturen können auch Poly-trifluorchlorethylen, Polyphenylensulfid (Ryton) und Penton eingesetzt werden. Bevorzugt ist die Verwendung von Poly-tetrafluorethylen.

Die Trennfähigkeit der Abtriebskolonne soll vorzugsweise 2 bis 8 praktischen Böden entsprechen. Mit steigendem Fluoridgehalt nimmt auch die Anzahl der Böden zu, die erforderlich ist, damit bei der Regenerierung am untersten Kunststoffboden die Fluoridkonzentration auf so niedrige Werte gesunken ist, dass Siliziumguss nicht mehr angegriffen wird. Der obere Teil besteht vorzugsweise aus 1 bis 7, insbesondere 1 bis 5, praktischen Böden.

Die aus der Abtriebssäule entweichenden Brüden können in einer geeigneten Kondensationseinrichtung kondensiert werden. Durch die Kondensationswärme kann die aufzuarbeitende Abfallschwefelsäure gleichzeitig vorgewärmt werden. Dieses Aufarbeitungsverfahren ist besonders energiesparend.

Um die obere Abtriebskolonne gegen Korrosion zu schützen, müssen – sofern kein Tantal eingesetzt wird – sowohl die Böden mit Aufbauten (Sieben oder Rosten für Füllkörper, bzw. Böden mit Sieben oder Glocken) mindestens oberflächlich aus Kunststoff bestehen.

Durch die Kunststoffauskleidung der Innenseite der Kolonne im oberen Teil werden die günstigen mechanischen Eigenschaften an sich bekannter Werkstoffe (wie z.B. Stahl) mit der guten chemischen Beständigkeit der Kunststoffe verbunden. In den meisten Fällen (z.B. bei Verwendung von Polytetrafluoräthylen) können die Kunststoff-Auskleidungen auf den äusseren Metallmantel nicht aufgeklebt werden. Um dennoch zu einer stabilen Verbindung zwischen Kunststoff und tragendem äusseren Mantel zu kommen, ist es vorteilhaft, die obere Abtriebskolonne in zylindrische Schüsse mit Flanschen aufzuteilen, die jeweils mit Kunststoff ausgekleidet und durch die Flansche miteinander verbunden werden. Dadurch wird es möglich, kurze Einspannlängen (z.B. von 200 bis 600 mm) für die Auskleidung zu erzielen, war für eine Verbesserung der mechanischen Stabilität vorteilhaft ist. Gleichzeitig können über diese Flanschverbindungen auch die Böden (aus Kunststoff) im Inneren befestigt werden. Es ist sinnvoll, die Einspannstellen entsprechend der Anzahl der gewählten Böden festzulegen. Sollte ein grösserer Boden/Boden-Abstand, z.B. über 600 mm, erforderlich sein, so kann man beispielsweise nur jede zweite Einspannstelle mit einem Boden bestücken.

Da man in dem Zwischenraum zwischen Kunststoff-Innenauskleidung und Metallmantel der Kolonne beim Betreiben der Kolonne den Druck um mindestens 10 mbar niedriger hält als in der Kolonne selbst, wird die Kunststoffauskleidung an den Kolonnenmantel aus Metall angepresst und abgestützt. So wird es möglich, die mit Kunststoff ausgekleidete Kolonne bis maximal 250°C selbst unter vermindertem Druck zu betreiben.

Der für die Kunststoffteile verwendete Kunststoff kann inerte Füllstoffe, insbesondere Graphit oder Glasfasern, enthalten, wodurch sich eine weitere Verbesserung der mechanischen und thermischen Beständigkeit der Kunststoff-Teile erzielen lässt.

Die Böden können als Glockenböden, Siebböden oder als Rost zur Aufnahme von Füllkörpern gestaltet werden. Wie oben erwähnt, können die Böden in einfacher Weise zwischen zwei Flanschen eingeklemmt werden. Daneben ist es auch möglich, den Böden die Form zylindrischer Töpfe zu geben und die Töpfe im Innern der Kolonne übereinanderzustellen. Ein Einspannen der Böden ist dann nicht mehr erforderlich. Die Böden der Töpfe tragen die Glocken oder dienen als Siebböden.

Es hat sich gezeigt, dass unverstärkte Kunststoff-Böden (z.B. Glockenböden aus Polytetrafluorethylen) mit grossen Abmessungen anfällig gegen Temperaturbelastung sind. Bei Erwärmung können sie sich wölben, was dazu führt, dass ein funktionierender Stoffaustausch ausgeschlossen ist. Diese Schwierigkeiten lassen sich jedoch beheben, wenn der Boden aus einer Metallplatte gefertigt und mit einer Kunststoffverkleidung, auch im Bereich der Durchtrittsöffnungen für Produkt, versehen wird. An den Durchtrittsöffnungen wird eine Verschweissung der Verkleidung erforderlich. Ebenso können auch Siebböden aus Metall verkleidet werden. Mann kann auch bei Verwendung von Kunststoffglocken, die einen geeigneten Klemmrand besitzen, die sich überlappenden Folienränder fest miteinander verklemmen. Besonders günstig ist es, die Böden aus massivem Kunststoff herzustellen und mehrere metallene Versteifungsprofile in der Plattenebene in der Weise einzusetzen, dass das Versteifungsprofil mit Produkt oder Produktdämpfen nicht in Berührung kommt.

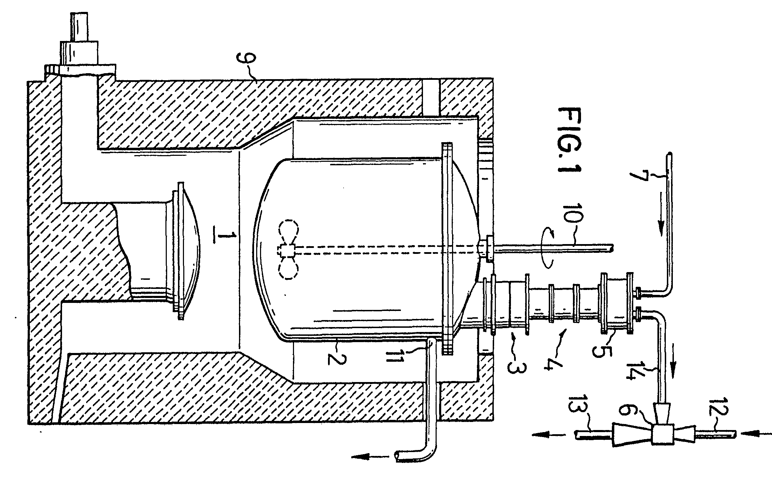

In Fig. 1 ist schematisch eine Apparatur zur Aufkonzentrierung von Schwefelsäure (Verwendung eines gusseisernen Kessels nach Pauling) dargestellt, die es erlaubt, mit den Brüden Fluorid zu entfernen.

Diese Apparatur besteht aus dem durch die Wand 9 begrenzten Feuerungsraum 1, dem Gusseisenkessel 2, der mit siedender ca. 95%iger Schwefelsäure gefüllt wird, dem Rührer 10, der unteren Abtriebskolonne 3, der oberen Abtriebskolonne 4 und der Brüdenhaube 5.

Die aufzuarbeitende Säure mit einem Gehalt von mindestens 65% $H_2SO_4$ wird durch Leitung 7 am oberen Ende der Brüdenhaube 5 aufgegeben. In der oberen Abtriebskolonne 4, in der Zeichnung aus 3 Stufen (Böden) bestehend, werden die flüchtigen Fluorverbindungen der zulaufenden Abfallschwefelsäure durch die aus der unteren Abtriebskolonne aufsteigenden Brüden weitgehend ausgetrieben. In der unteren Abtriebskolonne 3, die hier aus 2 Siliziumguss-Glocken besteht, wird die Schwefelsäure weiter konzentriert, so dass sie mit einem Gehalt von ca. 92% in den Kessel 2 zulaufen kann. Die aufkonzentrierte und regenerierte Säure verlässt den Kessel 2 durch den Überlauf 11 und gelangt anschliessend in eine (nicht dargestellte) Kühleinrichtung.

Die bei 5 abgehenden Brüden bestehen fast nur noch aus Wasserdampf und enthalten nur sehr wenig Schwefelsäure. Sie können neben Fluorwasserstoff noch flüchtige organische Verbindungen, Nitrose, $HNO_3$ und $SO_2$ enthalten. Sie werden durch die Leitung 14 zur Strahleinrichtung 6 gefördert, wo sie bei einem Unterdruck von z.B. 40 mbar abgesaugt und niedergeschlagen werden. Der Unterdruck in 6 wird durch das Treibmittel Wasser erzeugt, das durch Leitung 12 in den Strahler eintritt. Das durch die Leitung 13 austretende Abwasser wird einer Abwasser-Reinigungsanlage zugeführt.

Die im Kessel siedende Schwefelsäure hat einen Wassergehalt von ca. 5%. Der Wasser-Gehalt der Dampfphase über der siedenden Schwefelsäure liegt jedoch deutlich über 5%. Diese Dämpfe steigen auf und kommen im Gegenstrom mit der herablaufenden Säure in Berührung. Die Dämpfe kühlen sich ab, ihr Wassergehalt erhöht sich. Anderseits wird die ablaufende Säure – je weiter sie nach unten gelangt – immer heisser und ärmer an Wasser.

Die Kondensation der Brüden kann anstatt in der Strahleinrichtung auch durch einen Wärmetauscher erfolgen. Als Kühlmittel kann die aufzuarbeitende Abfallschwefelsäure eingesetzt werden, die dabei gleichzeitig vorgewärmt wird und so die Energieausnutzung bei der Säureregenerierung verbessert. Anschliessend muss das fluorwasserstoffhaltige Kondensat aufgearbeitet werden.

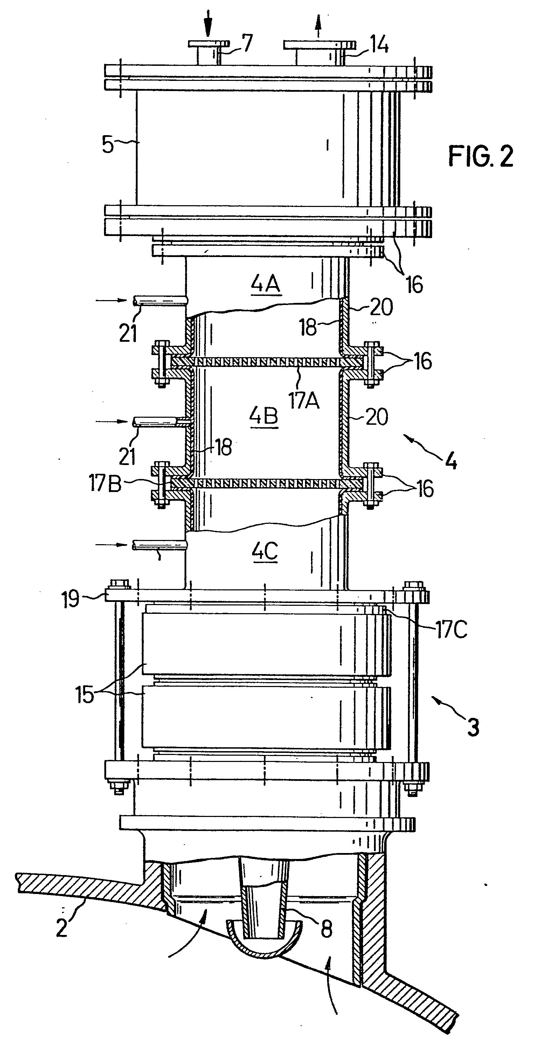

In Fig. 2 ist die obere Abtriebskolonne 4 einer erfindungsgemässen Vorrichtung zur Reinigung und Aufkonzentrierung fluoridhaltiger Abfallschwefelsäure im Schnitt dargestellt. Diese Kolonne ist in die 3 Schüsse 4A, 4B und 4C aufgeteilt.

Zwischen jeweils 2 Flanschen 16 werden 2 zylinderförmige, mit Bördel versehene Polytetrafluorethylen-Auskleidungen 18, die durch einen Boden 17A, 17B voneinander getrennt sind, eingeklemmt. In der Figur sind die Böden als Siebplatten aus massivem Kunststoff dargestellt. Selbstverständlich sind auch andere Bodenkonstruktionen, z.B. unter Mitverwendung von Metall, möglich. Am oberen Ende der Kolonne ist nur der Bördel einer Auskleidung 18 ohne Boden eingeklemmt; am unteren Ende der Kolonne wird der Bördel einer Auskleidung 18 durch den Flansch 19 an den untersten Boden 17C angepresst.

Die engen mantelförmigen Zwischenräume jedes Schusses 4A, 4B, 4C, die von einer Kunststoff-Auskleidung 18 und dem sie umgebenden Metallmantel 20 gebildet werden, sind über die Anschlüsse 21 mit einer Vakuumerzeugungseinrichtung (nicht gezeichnet) verbunden. In der unteren Abtriebskolonne 3 sind 2 Siliziumgussglocken 15 sichtbar. 8 stellt einen Trichter für den Ablauf der Schwefelsäure in den Kessel 2 dar.

Durch entsprechende Wahl der Anzahl der Austauschböden der obersten Abtriebssäule ist es möglich, sich auf verschiedene Fluoridgehalte der Abfallsäure einzustellen. Je höher der Fluoridgehalt ist, um so höher sollte auch die Anzahl der Böden in der oberen Abtriebskolonne sein. Wenn die Anzahl an Austauschböden festgelegt ist, so kann man sich dadurch helfen, dass man die fluoridhaltige Abfallsäure mit einer fluoridfreien Abfallsäure verdünnt und so den mittleren Fluoridgehalt senkt. Es ist ferner günstig, das Verhältnis $(W_1-W_2) : F_1$ nicht unter 10 sinken zu lassen und nach Möglichkeit über 40 zu wählen. Dabei bedeutet $W_1$ den Wassergehalt und $F_1$ den Fluoridgehalt der zulaufenden Säure und $W_2$ den Wassergehalt der ablaufenden Säure.

Es hat sich gezeigt, dass bei der Aufarbeitung von Abfallschwefelsäuren, die bei der Nitrierung organischer Fluorverbindungen anfallen, die Verluste von Schwefelsäure durch die abgehenden Brüden besonders hoch sind. Um diese Verluste in Grenzen zu halten, kann man mit verringertem Durchsatz, d. h. unter Kapazitätsverlust, die Pauling-Anlage benutzen. Zur Überwindung dieses Nachteils ist es vorteilhaft, auf die obere Abtriebskolonne eine Brüdenhaube aufzusetzen. Diese Brüdenhaube soll einen grösseren Durchmesser als die Abtriebskolonne aufweisen, so dass der Querschnitt der Brüdenhaube um mindestens 30% grösser als der der obersten Abtriebskolonne ist. Damit lässt sich erreichen, dass die Brüden-Geschwindigkeit bei Eintritt in die Brüdenhaube um mindestens 30% verringert wird. Durch diese Ausgestaltung des erfindungsgemässen Verfahrens lässt sich der Säureverlust auf 0,2 bis 2% herabsetzen. Gleichzeitig bleibt die Kapazität der Konzentrierungsanlage voll erhalten.

Die obere Abtriebskolonne kann sowohl als Füllkörper-Kolonne, Siebbodenkolonne oder Glockenboden-Kolonne ausgestaltet sein. Heute wird die Glockenboden-Kolonne aus verfahrenstechnischen Gründen bevorzugt; jedoch ist es schwierig, Glocken aus thermoplastischem Kunststoff so zu gestalten, dass sie unter den thermischen Belastungen der $H_2SO_4$-Regeneration nicht ihre Form verlieren.

Beispiel

Abfallschwefelsäure von der Nitrierung von Chlor-benzotrifluorid enthielt 72% $H_2SO_4$, 2% $HNO_3$, 1,6% Nitrit, 0,2% Fluorwasserstoffsäure, 0,74% Gesamt-Fluor, 0,2% Kohlenstoff und 55 ppm Chlorid. Der Wassergehalt beträgt ca. 25%.

Zur Regenerierung nach Pauling wurde eine Kolonne mit 2 Siliziumguss-Böden und 3 Böden aus Polytetrafluorethylen, die jeweils mit 7 Polytetrafluorethylen-Glocken bestückt waren, verwendet. Die Kolonnenschüsse werden zusammen mit den Böden an den Flanschen miteinander dicht verschraubt. Da die Abdichtung der genannten Apparatur schwierig ist und kein Schwefelsäuredampf austreten soll, wird ein Unterdruck im Kessel von 40 mbar aufrechterhalten. Der Durchmesser der Kolonne beträgt ca. 40 cm.

Die Temperatur betrug am Brüdenausgang 125 °C und auf dem untersten Kunststoff-Boden 170 °C. Die Temperatur des Destillationskessels wurde auf 315 °C gehalten. Die ablaufende, gereinigte Schwefelsäure wies einen Gehalt von 97,3% $H_2SO_4$ auf. Der Gehalt an Restfluorid betrug nur 0,007%. Das entspricht einer Entfernung von über 99% des Fluorids. Derart niedrige Fluorid-Gehalte üben auf das Metall der unteren Abtriebskolonne und des Destillationskessels keine (im Vergleich zu fluoridfreier Schwefelsäure) vergrösserte Korrosion auf.

**Patentansprüche**

1. Verfahren zur Reinigung fluoridhaltiger, 65- bis 95%iger Abfallschwefelsäure, die Wasser, organische Verunreinigungen und 0,02 bis 5% Fluorid enthält, dadurch gekennzeichnet, dass man die Abfallschwefelsäure auf den obersten Boden einer Abtriebskolonne gibt, die aus einem oberen Teil mit 1 bis 9 Böden und einem unteren Teil aus Siliziumguss mit 1 bis 3 Böden besteht, wobei der obere Teil einen Kolonnenmantel aus Metall enthält, der auf der Innenseite eine Auskleidung aus säurefestem Kunststoff trägt, wobei zwischen Auskleidung und Metallmantel ein Zwischenraum besteht und der Druck in diesem Zwischenraum um mindestens 10 mbar niedriger gehalten wird als in der Kolonne selbst, man die Abfallschwefelsäure in der Kolonne aufheizt und vorkonzentriert, man anschliessend die aufgeheizte Säure in einen mit siedender konzentrierter Schwefelsäure gefüllten Pauling-Kessel aus Gusseisen führt, man die aus dem Pauling-Kessel entweichenden Schwefelsäuredämpfe in der Abtriebskolonne durch die entgegenströmende Abfallschwefelsäure kondensiert und man fluoridfreie konzentrierte Schwefelsäure aus dem Pauling-Kessel abzieht.

2. Verfahren nach Anspruch 1, dadurch gekennzeichnet, dass man bei einem Arbeitsdruck von 0,2 bis 2 bar arbeitet und man im oberen Teil der Abtriebskolonne eine Temperatur von 60 bis 250 °C einhält.

3. Vorrichtung zur Reinigung und Aufkonzentrierung fluoridhaltiger Abfallschwefelsäure, bestehend aus einem gusseisernen Pauling-Kessel und einer zweiteiligen Abtriebskolonne, deren unterer Teil aus 1 bis 3 praktischen Böden besteht und aus Siliziumguss gefertigt ist, und deren oberer Teil mindestens einen praktischen Boden enthält, dadurch gekennzeichnet, dass der obere Teil der Kolonne, deren Mantel aus Metall besteht, eine Innenverkleidung aus säurebeständigem Kunststoff besitzt und zur Anlage von Unterdruck zwischen Innenverkleidung und Metallmantel Anschlüsse für eine Vakuumerzeugungseinrichtung vorgesehen sind.

**Claims**

1. Process for the purification of fluoride-containing 65 to 95% strength waste sulfuric acid which contains water, organic impurities and from 0.02 to 5% of fluoride, which comprises introducing the impure sulfuric acid onto the top tray of a stripping column consisting of an upper section which has from 1 to 9 trays and a lower section which is manufactured from high-silicon cast iron and has from 1 to 3 trays, the upper section containing a column jacket of metal which carries an acid-resistant plastic lining on the inside, a gap existing between the inner plastic lining and the metallic jacket and the pressure in this gap being kept at least 10 mbar lower than in the column itself, heating up and preconcentrating the waste acid in said column, passing the heated acid into a Pauling kettle made of cast iron and filled with boiling concentrated sulfuric acid and condensing the sulfuric acid vapors escaping from this Pauling kettle in the stripping column by means of the waste sulfuric acid flowing in counter-current, and withdrawing concentrated sulfuric acid free from fluorid from the Pauling kettle.

2. Process as claimed in claim 1, wherein an operating pressure of 0.2 to 2 bars is applied and a temperature of 60 to 250 °C is maintained in the upper section of the stripping column.

3. Device for the purification and concentration of fluoride-containing waste sulfuric acid, consisting of a Pauling kettle made of cast iron and a two-part stripping column, the lower section of which consists of 1 to 3 actual trays and is manufactured from high silicon cast iron and the upper section of which contains at least one actual tray, wherein the upper section of the column, the jacket of which consists of metal, has an inner lining of an acid-resistant plastic and connections for a vacuum-producing apparatus to produce subpressure are provided between the inner lining and the metal jacket.

**Revendications**

1. Procédé de purification d'acide sulfurique résiduaire, présentant une teneur de 65 à 95%, contenant du fluor et qui contient de l'eau, des impuretés organiques et 0,02 à 5% de fluorure, procédé caractérisé en ce qu'on introduit l'acide sulfurique résiduaire au niveau du plateau supérieur d'une colonne de stripage consistant en une partie supérieure comportant un à neuf plateaux et en une partie inférieure en silicium coulé ou moulé comportant un à trois plateaux, la partie supérieure contenant une enveloppe de colonne en métal portant du côté intérieur un chemisage en une matière plastique résistant aux acides, un espace intermédiaire étant ménagé entre le chemisage et l'enveloppe de métal et la pression régnant dans cet espace intermédiaire étant maintenue à une valeur inférieure d'au moins 10 mbars à celle régnant dans la colonne elle-même; en ce qu'on chauffe l'acide sulfurique résiduaire dans la colonne et on le préconcentre, puis l'on achemine l'acide ainsi chauffé dans une chaudière de Pauling en fonte, emplie d'acide sulfurique bouillant et concentré, on condense, à l'aide de l'acide sulfurique résiduaire circulant à contre-courant, les vapeurs d'acide sulfurique s'échappant dans la colonne de stripage de la chaudière de Pauling et l'on soutire de la chaudière de Pauling l'acide sulfurique concentré et sans fluorure.

2. Procédé selon la revendication 1, caractérisé en ce qu'on travaille sous une pression de travail de 0,2 à 2 bars et en ce qu'on maintient dans la partie supérieure de la colonne de stripage une température de 60 à 250 °C.

3. Appareil de purification et de concentration d'acide sulfurique résiduaire contenant du fluor, consistant en une chaudière de Pauling en fonte et en une colonne de stripage divisée en deux parties, dont la partie inférieure consiste en un à trois plateaux réels et est en silicium coulé ou fondu et dont la partie supérieure contient au moins un plateau réel, appareil caractérisé en ce que la partie supérieure de la colonne, dont l'enveloppe est en métal, possède un chemisage interne en une matière plastique pouvant résister à l'acide et, pour la réalisation d'une dépression entre le chemisage interne et l'enveloppe, la colonne comporte des raccords de liaison avec une installation productrice d'une dépression.

FIG. 1

FIG. 2